# EUROPÄISCHE PATENTSCHRIFT

(11) **EP 2 901 514 B1**
(45) Veröffentlichungstag und Bekanntmachung des Hinweises auf die Patenterteilung: **21.12.2016**
(21) Anmeldenummer: 13776431.2
(22) Anmeldetag: 24.09.2013
(51) Int. Cl.: H01M 2/36, H01M 10/0525, H01M 10/48

(54) **VERFAHREN ZUM BEFÜLLEN ELEKTROCHEMISCHER ZELLEN**
METHOD FOR FILLING ELECTROCHEMICAL CELLS
PROCÉDÉ DE REMPLISSAGE DE CELLULES ÉLECTROCHIMIQUES

(30) Priorität: 25.09.2012 DE 102012109032
(43) Veröffentlichungstag der Anmeldung: 05.08.2015
(73) Patentinhaber: Fraunhofer-Gesellschaft zur Förderung der angewandten Forschung e.V., 80686 München (DE)
(72) Erfinder: THÖNNESSEN, Torge, 22605 Hamburg (DE); NEUMANN, Gerold, 25469 Halstenbek (DE)
(74) Vertreter: Strehl Schübel-Hopf & Partner
(86) Internationale Anmeldenummer: PCT/EP2013/069842
(87) Internationale Veröffentlichungsnummer: WO 2014/048918

(56) Entgegenhaltungen:
- EP-A1- 1 045 463
- EP-A1- 2 393 146
- DE-C1- 19 911 800
- GB-A- 2 329 513
- US-A1- 2002 106 555
- US-A1- 2006 260 713
- US-B1- 6 371 996

## Beschreibung

Die Erfindung betrifft ein Verfahren zur kontrollierten Befüllung von form- und größenflexiblen elektrochemischen Energiespeichern wie z.B. Akkumulatoren (sogenannten "Pouch-Zellen") mit gegebenenfalls korrosiven Elektrolytflüssigkeiten (nachstehend auch einfach als "Elektrolyt" bezeichnet) auf Basis eines organischen Lösungsmittels ohne die Gefahr der Verunreinigung der Folienbeutel oder der Arbeitsumgebung mit Elektrolytflüssigkeit und ohne die Gefahr verbleibender Gasblasen im Inneren der Beutel. Dieses Verfahren bietet bedeutende Vorteile gegenüber den technisch etablierten Verfahren. Insbesondere können kontrollierte Druckbedingungen eingestellt und hermetisch getrennte Kompartimente genutzt werden, um eine zwangsförderungsfreie Befüllung der Zellkörper von Pouch-Zellen zu erreichen. In einer besonderen Ausführungsform der Erfindung ist der Energiespeicher zur Verbesserung der Elektrolytaufnahme dabei mit perforierten Elektrodenfolien ausgestattet.

Die vorliegende Erfindung betrifft damit einen Prozessschritt in der Verfahrenskette der Herstellung von elektrochemischen Energiespeichern wie Akkumulatoren. Es handelt sich um denjenigen Verfahrensschritt, bei dem in eine bereits vollständig aufgebaute Zelle Elektrolytflüssigkeit eingefüllt wird, um die Zelle elektrochemisch zu aktivieren und damit den Ionen-Transport zwischen Anode und Kathode zu ermöglichen.

Elektrochemische Energiespeicher auf Basis von Lithiumtechnologie wie Lithium-Akkumulatoren, -Batterien oder -Supercaps (letzteres ist die übliche Bezeichnung für die sogenannten Superkondensatoren, meist Doppelschichtkondensatoren mit hoher Leistung) sind seit Beginn der 1990er Jahre nach und nach zur marktbeherrschenden elektrochemischen Speichertechnologie insbesondere in Verbraucheranwendungen geworden. Hohe Energiedichten bei hoher Lebensdauer wie auch guter Belastbarkeit sind ihre großen Vorteile. In Verbraucheranwendungen sind Zellen eher geringen Energieinhaltes im Bereich einiger Wattstunden bis hin zu einigen zehn Wattstunden erforderlich. Es gibt jedoch einen stark ansteigenden Bedarf an großen Zellen mit Energieinhalten von bis zu einigen 100 Wattstunden, verursacht durch das stark ansteigende Interesse an großen Speichersystemen für beispielsweise batteriebetriebene Elektrofahrzeuge oder bei der Zwischenspeicherung von elektrischer Energie, die aus erneuerbaren Quellen erzeugt worden ist. Die Herstellung großer Zellen stellt neue Anforderungen an die Fertigungstechnologie. Der Aufbau einer Lithiumspeicherzelle kann in verschiedenen Technologievarianten erfolgen.

Man unterscheidet bei den am weitesten verbreiteten Lithiumzellen zwischen Lithium-Ionen-Akkumulatoren und Lithium-(Ionen)-Polymer-Akkumulatoren.

Lithium-Ionen-Zellen bestehen aus den Elektrodenfolien Anode und Kathode, die durch den Separator getrennt werden und in einem starren Metallgehäuse verbaut sind. Die aktiven Schichten mit den Eigenschaften einer Anode bzw. einer Kathode werden als dünne Schichten auf in der Regel geschlossenen Metallfolien abgeschieden und liegen für den Zellbau als Halbzeuge vor. Die Elektroden selbst bestehen aus einem Verbund von Aktivpartikeln, denen zur Verbesserung der Leitfähigkeit häufig ein Leitruß zugegeben wird. Die Partikel werden durch einen kunststoffbasierten Binder zusammengehalten. Dabei kann es sich zum Beispiel um Polyvinylidenfluoride unterschiedlicher Kettenlänge mit oder ohne Co-Polymer handeln. Auch wasserlösliche Binder kommen zunehmend zum Einsatz wie z.B. in Mischungen aus Styrol-Butadien-Kautschuk und Carboxymethylcellulose. Bekannte Anodenmaterialien sind z.B. Graphit, amorpher Kohlenstoff, Silizium, Lithiumtitanat oder Zinnverbindungen. Als Kathodenmaterialien kommen insbesondere Lithiumkobaltoxid, Lithiumnickelkobaltaluminiumoxid, Lithiumnickelkobaltmanganoxid, Lithiummanganphosphat, Lithiumeisenphosphat, Lithiumkobaltphosphat, Lithiummangan-Phosphat oder Lithiumvanadiumpentoxid zur Anwendung. Dem Fachmann sind weitere Anoden- und Kathodenmaterialien bekannt. Separatoren sind elektronisch isolierende dünne Schichten, z.B. Polymerfilme, die sich durch eine hohe Mikroporosität auszeichnen und keramische Bestandteile aufweisen können, die die Benetzung mit Elektrolyt und die Ionenleitfähigkeit im Separator verbessern. Die erforderliche ionische Leitfähigkeit in der Zelle wird durch die Zugabe einer genau dosierten Menge eines flüssigen Elektrolyten in einen Zellstapel bzw. einen Wickel, bestehend aus Anoden-, Kathodenfolie und Separator, erreicht. Bei dem Elektrolyten handelt es sich typischerweise um ein Lithiumsalz (das sogenannte Leitsalz), das in einem organischen Lösemittel oder einer Mischung von zwei oder mehr Lösemitteln gelöst ist. Bei den Lösemitteln handelt es sich vorzugsweise um Carbonate wie Ethylencarbonat, Propylencarbonat, Dimethylcarbonat, Diethylcarbonat oder Ethylmethylcarbonat oder auch gamma-Butyrolacton. Dem Fachmann ist eine Vielzahl weiterer Lösemittel bekannt. Als Leitsalz werden Lithiumhexafluorophosphat, Lithiumperchlorat, Lithiumtetrafluoroborat oder Lithiumbis(oxalato)borat eingesetzt. Auch hier sind dem Fachmann weitere Lithiumsalze bekannt. Der Elektrolyt muss den gesamten Batteriekörper durchdringen. Dies gelingt durch eine bei der Herstellung der Elektrodenfolien durch die Prozessführung erreichte Mikroporosität, die ebenfalls der Separator besitzen muss. In die so erhaltenen Mikroporen zieht der Flüssigelektrolyt durch Kapillarkräfte ein. Eine gute und gleichmäßige Verteilung des Elektrolyten im gesamten Folienverbund ist für die Funktionalität der Lithiumzelle unbedingt erforderlich.

Lithium-Ionen-Polymer-Zellen sind nach dem gleichen Grundkonzept aufgebaut. Allerdings ist das Gehäuse nicht ein starres Metallgehäuse, sondern in der Regel eine mit Kunststoff beschichtete Metallfolie, z.B. eine Aluminiumverbundfolie, die häufig auch mit dem Begriff "Pouchfolie" bezeichnet wird. Deshalb wird für diese Technologievariante auch der Begriff Pouch- oder Coffee-Bag-Technologie verwendet.

Um den flüssigen Elektrolyten in Polymer-Zellen bei Verwendung eines Foliengehäuses zu fixieren, werden in der Elektrodenherstellung häufig Binder verwendet, die mit den Lösemitteln des Flüssigelektrolyten vollständig oder bis zum einem gewissen Grad gelifizieren und somit den Elektrolyten binden. Auch für diese Technologievariante ist die homogene Verteilung des Flüssigelektrolyten für die Funktionalität der Zelle wesentlich.

Zellen werden entweder als prismatische Zellen oder als zylindrische Zellen aufgebaut. Prismatische Zellen haben eine rechteckige äußere Form. Speziell Pouchzellen haben in der Regel eine prismatische Gestalt. Der Vorteil prismatischer Zellen ist, dass eine verbesserte Wärmeabfuhr möglich ist, da das Verhältnis von Zellvolumen zu Zelloberfläche günstig für die Wärmeabgabe ist. Deshalb werden besonders große Zellen mit hohem Energieinhalt häufig als prismatische Pouchzellen ausgeführt. In zylindrischen Zellen liegen die Elektroden- und Separatorfolien in gewickelter Gestalt vor.

Die Fertigung von Zellen in Pouch-Technologie kann in Stapel- oder Wickeltechnologie erfolgen. In der Wickeltechnologie werden die drei Folien (Anodenfolie, Separatorfolie, Kathodenfolie) in einer solchen Länge aufgewickelt, dass die Zielkapazität der Zelle erreicht ist. Natürlich muss dabei Sorge getragen werden, dass die äußere Elektrodenfolie einer inneren Wicklung und die innere Elektrodenfolie einer äußeren Wicklung durch ein nichtleitendes Material voneinander getrennt sind.

In der Stapeltechnologie werden so viele Folienblätter in der erforderlichen Reihenfolge aufeinander gelegt, bis die Zielkapazität erreicht ist. Die Anforderung der Trennung von Anoden- und Kathodenfolien durch ein nichtleitendes Material gilt natürlich auch hier. Die durch den bzw. mehrere Separatoren getrennten Anoden- und Kathodenfolien werden mit einem Strom-Ableitblech oder einem anderen Ableiter verschweißt oder auf sonstige Weise verbunden, um die Stromdurchführung aus der hermetisch zu schließenden Zelle heraus realisieren zu können. Diese mit Strom-Ableitblechen o. dgl. versehenen Stapel werden im weiteren Fertigungsverfahren mit einer Pouch-Folientüte (auch als Beutel bezeichnet) umschlossen und mit Elektrolyt getränkt. Der Elektrolyt ist häufig gesundheitlich bedenklich und empfindlich schon gegen geringste Spuren von Feuchtigkeit. Die typischerweise eingesetzten Lösemittel weisen häufig einen hohen Dampfdruck auf. Die Pouch-Folie zeichnet sich dadurch aus, dass sie einerseits inert gegenüber korrosiven Salzen und andererseits inert gegenüber aggressiven organischen Lösungsmitteln sein muss und mittels Heißsiegelverfahren verschweißt werden kann. Das hermetische Verschließen von Pouch-Tüten bei der Herstellung von Akkumulatoren stellt eine große Herausforderung an die Prozesstechnik dar, da typischerweise verwendete Pouchfolien knick- und bruchsensibel, anfällig für Verletzungen der korrosionsinhibierenden Kunststoffschichten und an den Schnittkanten der Folien ungeschützt gegenüber Korrosion sind. Kommerzielle Produkte, die diesen Anforderungen genügen, sind jedoch im Handel erhältlich.

Bei den gängigen Fertigungsverfahren wird der Zellkörper typischerweise mit den Strom-Ableitblechen zwischen der Pouch-Folienverpackung orientiert und durch eine dreiseitige Siegelung für die Elektrolytbefüllung vorbereitet. Die letzte Seite wird nach der Elektrolytbefüllung durch einen weiteren Siegelschritt geschlossen.

Dieses Verfahren weist eine Reihe ungenügend gelöster Probleme auf, insbesondere während des Schritts des Befüllens der Pouch-Tüte mit Elektrolyten, wodurch die Leistungsfähigkeit, die Langlebigkeit und die Sicherheit der Akkumulatoren nachhaltig negativ beeinflusst werden können.

Probleme beim Einbringen der Elektrolytflüssigkeit sind z.B. in DE 10 2009 057 155 A1 beschrieben. Dabei können nämlich Verschleppungen oder Tröpfchen entstehen, die ein unerwünschtes Kontaminieren von Oberflächen der Zelle mit Elektrolytflüssigkeit bewirken. Beispielsweise können in Verbindung mit Luft bzw. mit Feuchtigkeit korrosive Verbindungen auf den zum Teil metallischen Oberflächen der Zelle entstehen. Hierdurch wird die Dauerhaltbarkeit der Zelle beeinträchtigt, und zwar sowohl die Zykelfestigkeit als auch die kalendarische Lebensdauer. Eine derartige Kontamination ist deshalb zu unterbinden. Bei Pouch-Zellen ist zudem der Kontakt der Elektrolytflüssigkeit mit Bereichen der späteren Siegelnaht in der äußeren Hülle, in der Regel einem wie oben beschriebenen Folienbeutel, zu vermeiden, da ansonsten eine sichere und dauerhafte Abdichtung nicht gewährleistet werden kann. Ein einfaches Abwischen und Abwaschen der Elektrolytflüssigkeit reicht nicht aus, da die Elektrolytflüssigkeit in der Regel bereits aufgrund kapillarer Wirkungen in nicht erreichbare Bereiche des kontaminierten Bauteils eingedrungen sein kann.

WO 03/005464 A2 beschreibt eine technische Vorrichtung, die die bereits dreiseitig geschlossene Zelle einer Befüllung durch einen Befüll-Stutzen zugänglich macht. Dabei wird die kontaminationsreduzierte Befüllung durch eine zwangsgeführte Elektrolytdosierung beschrieben, die mittels einer Förderpumpe erfolgt. Die Füllvorrichtung weist eine Einrichtung zur Zurückhaltung von Elektrolyt und zum Absaugen überschüssiger Tropfmengen auf.

DE10 2009 057155 A1 beschäftigt sich mit der Weiterentwicklung dieser Technologie. Wesentlich ist in dieser Anmeldung, dass das Füllrohr für die Elektrolyt-Dosierung axial mit einem verstellbaren Hüllrohr umgeben ist. Hierdurch soll eine Kontamination der Zellumgebung beim Dosieren des Elektrolyten weiter reduziert werden.

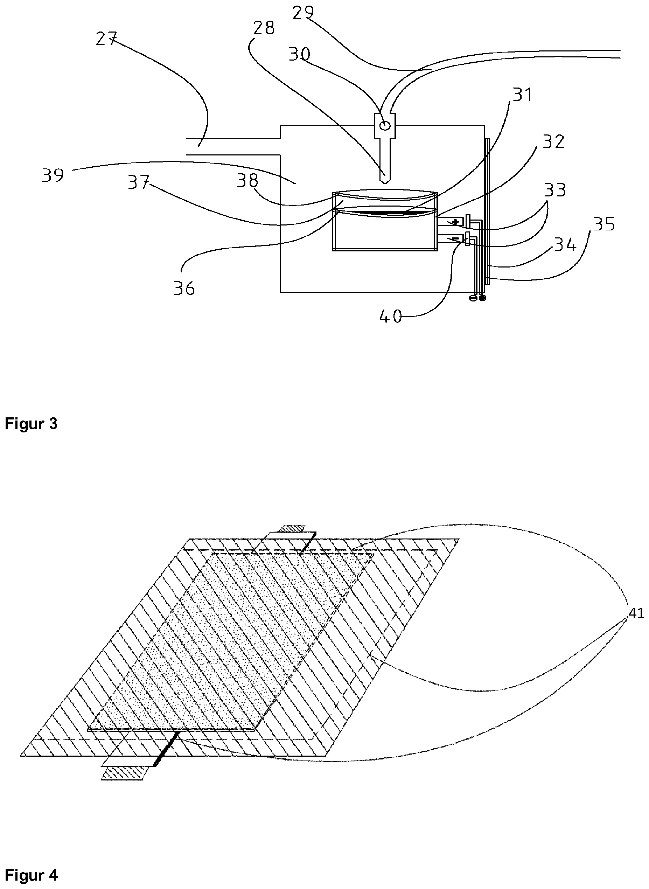

Moderne Akkumulatoren werden üblicherweise mit geschlossenen Metallfolien als Elektrodenfoliensubstrat hergestellt und großformatig ausgeführt (es ergeben sich hoch kapazitative Zellen), da so Vorteile beim Aufbau und der Integration der Zellen in die jeweilige Anwendung entstehen. Trotzdem muss sichergestellt werden, dass der Elektrolyt bei der Befüllung einer Zelle zügig und zuverlässig in den Elektrodenfolienstapel eindringt und ihn vollständig durchsetzt und benetzt. Der Elektrolyt muss dabei in die Poren der Schichten eindringen, wofür bei einer aus Kostengründen in der Regel bevorzugten Verwendung von geschlossenen Strom-Ableitfolien nur ein kleiner Eindringquerschnitt und eine lange zu überwindende Diffusionsstrecke genutzt werden kann, siehe Figur 3. Des Weiteren muss das in den Poren vorhandene Gas (i.d.R. ein Schutzgas) verdrängt werden. Obwohl das Eindringen des Elektrolyten in die Schichten durch Kapillarkräfte begünstigt ist, ist diese Verdrängung wenig effizient, wenn der Elektrolyt nur durch einen kleinen Eindringquerschnitt in den Zellkörper diffundieren kann und der Separator darüber hinaus innig mit den Elektrodenfolien verbunden ist (z.B. über eine Lamination der organischen Komponenten der Schichten).

Die hierbei auftretenden Schwierigkeiten haben zur Entwicklung von sogenannten Vakuum-Elektrolyt-Befüll-Verfahren geführt, die technisch alle grundsätzlich ähnlich aufgebaut sind. Hierfür werden in einer abgetrennten Atmosphäre (z.B. Glovebox-Umgebung) unter Schutzgasatmosphäre in einer evakuierbaren Kammer eine oder mehrere teilgeschlossene, z.B. dreiseitig geschlossene, vorbereitete Zellen bereitgestellt, und Elektrolytflüssigkeit wird an der oberen Kante der Zelle (Kopfseite) mit einer Befüll-Vorrichtung wie in WO 03/005464 A2 oder DE 10 2009 057155 A1 gezeigt in die Zelle gespritzt. Entweder wird der Elektrolyt dabei direkt in ein vorher in der Kammer eingestelltes Vakuum injiziert, oder der Elektrolyt wird bei Raumdruck in die Zelle gepumpt und anschließend wird die Kammer evakuiert, um das Gasvolumen in den Poren der Schichten zu entfernen und dadurch die Durchdringung der Schichten mit dem Elektrolyten zu begünstigen, da auf diese Weise die Kapillarkräfte effektiv wirken können. Ggf. werden die Schritte des Elektrolyt-Injizierens und Evakuierens nach dem Auflösen des Unterdruckes mehrmals wiederholt. Anschließend wird ein Vakuum hergestellt und die Zelle an der Kopfnaht durch einen Heißsiegelprozess geschlossen, das Vakuum wird sodann gebrochen, und die Zelle wird aus der Befüll-Station entnommen. Ergänzende Komponente einer solchen Befüll-Station kann eine Prä-Formier-Einrichtung sein, die vor dem abschließenden Siegelschritt der Kopfnaht die Zelle mit einem Potential beaufschlagt. Dies hat den Vorteil, dass es ggf. frühzeitig zu einer unter Potentialeinfluss erstmals entstehenden Gasblasenbildung kommt, die in manchen Konstellationen durch Reaktion des Elektrolyten mit Verunreinigungen oder mit einer Elektrodenoberfläche in der Zelle auftritt. Maßnahmen zum Abführen der Gasblasen können daher vor dem endgültigen Verschließen der Zelle erfolgen.

Durch die leichte Flüchtigkeit der organischen Lösungsmittel, die den Hauptbestandteil der Elektrolytflüssigkeiten ausmachen, ergeben sich Probleme bei dieser Technologie. Beim Injizieren von Elektrolyt ins Vakuum oder beim Evakuieren der (teil-)befüllten Zelle verdampft nämlich ein merklicher Teil der leichtflüchtigen Komponenten des Elektrolyten und kontaminiert dabei alle in der Kammer vorhandenen Oberflächen. Dies ist insbesondere für empfindliche Elektronikbauteile, die einer optionalen Präformierung unterworfen werden sollen, für Sichtfenster und die integrierte Siegelstation problematisch. Alle so mit Elektrolyt in Berührung kommenden Teile müssen daher in einer Intergasatmosphäre gehalten werden, wodurch der Gesamtaufbau teuer und aufwändig zu warten ist. Die vielen Komponenten und die notwendige Ausführung der Anlage nach ATEX (Atmosphere Explosive) -Richtlinien erhöhen bei diesem Verfahren zudem die Anlagenkosten.

Ein weiterer Nachteil besteht in der Veränderungen der Zusammensetzung des Elektrolyten durch Verdampfen einzelner leichtflüchtiger Elektrolyt-Komponenten, und eine schnelle Reduktion des Druckes führt bei diesem Verfahren zudem zu einem Aufschäumen des Elektrolyten, was zu der oben beschriebenen und unbedingt zu vermeidenden Kontamination der Umgebung mit korrosiven Leitsalzen führt. Außerdem ist der typischerweise erreichbare Enddruck bei der offen ausgeführten Vakuum-Befüllung um den Dampfdruck des Elektrolyten reduziert, so dass die erwünschte Unterstützung der Kapillarkräfte bei der Durchdringung der Zellkörper nicht voll zur Geltung kommen kann.

Neben der Vakuumbefüllung sind auch andere Varianten zur erleichterten Elektrolytverteilung im Batteriekörper beschrieben worden. Eine Möglichkeit besteht in der Verwendung von Stromableitern, die Öffnungen besitzen. Die Verwendung von Streckmetall ist in EP 1 570 113 B1 beschrieben. Die Verwendung von Streckmetallen ist jedoch kostenintensiv, seine Herstellung ist teuer und erlaubt keine Direktbeschichtung der Elektrodenmasse auf den Stromableiter. Zusätzliche Prozessschritte wie Umlaminieren der auf Trägerfolie abgeschiedenen Elektrodenfolie auf das Streckmetall sind aufwändig.

Aus EP 1 396 037 A2 ist ein Befüllungsverfahren für einen Batterie-Folienbeutel bekannt, bei dem der Folienbeutel erst einmal so verschweißt wird, dass sich in einer ersten, tieferliegenden Tasche die Batterie befindet und diese über eine Öffnung mit einer für die Aufnahme von Gasblasen vorgesehenen, oberen zweiten Tasche verbunden ist, die ihrerseits einen Eingang zum Befüllen mit Elektrolyt mit Hilfe eines zurückziehbaren Dispenser-Elements besitzt. Der Beutel kann von einer Vakuumkammer in Form eines Stützkörpers umgeben sein, um während der Einführung der Elektrolytflüssigkeit in der Umgebung des Folienbeutels einen Unterdruck anlegen zu können. Nach dem Befüllvorgang wird das Dispenser-Element zurückgezogen, und danach wird der Folienbeutel gesiegelt.

Auch EP 1 708 295 A2 beschreibt ein Befüllungsverfahren für einen derartigen Beutel. Ähnlich wie in EP 1 396 037 A2 beschrieben ist dieser in zwei Kompartimente unterteilt. Im Folienbeutel kann zur Erleichterung des Befüllvorgangs ein Unterdruck eingestellt werden, allerdings geschieht dies nicht mit Hilfe einer den Beutel umgebenden Vakuumkammer.

EP 1 045 463 A1 offenbart neben Befüllungsverfahren, bei denen ein elektrolythaltiger Beutel innerhalb des bereits verschlossenen, den Batterie- bzw. Akkumulator enthaltenden Folienbeutels zerrissen wird, die Befüllung mit Hilfe eines Einfüllrohrs, das über einen DreiWege-Hahn mit einem Elektrolyt-Vorratsgefäß und mit einer Vakuumpumpe verbunden ist. Nach Evakuierung erfolgt die Elektrolytbefüllung; danach wird das Rohr abgedichtet. Danach wird der Akkumulator gezykelt; eventuell entstehende Gasblasen werden entfernt, indem das Rohr wieder ab- bzw. aufgeschnitten wird; nach Entfernen der Gasblasen wird das Rohr nochmals verschweißt, und der Rohrstutzen wird über die verpackte Batteriezelle gefaltet.

Das Verfahren zum Befüllen einer elektrochemischen Zelle mit Elektrolyt, das in DE 199 11 800 C1 offenbart wird, nutzt einen Einfüllstutzen am Folienbeutel, in den eine Kanüle hineingesteckt wird, um das Innere des Folienbeutels mit Elektrolyt-Lösung zu versorgen. Nach der Befüllung wird die Kanüle auf eine Höhe unmittelbar oberhalb des Einfüllstutzens herausgezogen und dieser verschlossen, beispielsweise verschweißt.

In EP 2 393 146 A1 wird eine Batterie vom Beuteltyp beschrieben, die mehrfach wiederverwendet werden kann, weil sie mit Elektrolyt wiederbefüllbar ist oder der Elektrolyt ausgetauscht werden kann. Hierfür enthält sie an einer Seite, auf der sich nicht die Ankontaktierungen für die Elektroden befinden, eine Einfüllöffnung, die reversibel mit einem Stopfen verschließbar ist. Zum Entleeren oder Befüllen werden der Stopfen entfernt und die Einfüllöffnung über ein Verbindungsstück mit einem Behälter verbunden, der Elektrolytlösung enthält. Je nachdem, ob entleert oder befüllt werden soll, ist der Druck im Behälter höher oder niedriger als im Batterie-Beutel.

Das Füllverfahren der US 6,371,996 B1 erfolgt in einer Vakuumkammer. Für den Befüllvorgang wird eine ganze Seite des Folienbeutels offen gehalten; er erfolgt in einer Haltevorrichtung. Die Menge des Elektrolyten wird mit einer Messpumpe abgemessen und über eine Düse in den Folienbeutel injiziert.

Als weiteres Verfahren ist vorgeschlagen worden, den Elektrolyten mit geringen Mengen eines Netzmittels zu versehen. Dabei kann es sich insbesondere um Fluortenside handeln. Eine Beschreibung dieses Ansatzes findet sich in DE 10 2010 020 992 A1. Der Nachteil dieses Verfahrens besteht darin, dass dieser Zusatzstoff negative Einflüsse auf die elektrochemischen Prozesses in der Zelle haben kann, was zu einer reduzierten Lebensdauer oder Gasbildung unter Betriebsbedingungen führen kann.

Eine weitere Möglichkeit besteht darin, die Folien mit einer kapillarkräfteunterstützenden Beschichtung zu versehen. Dies kann beispielsweise durch keramikbeschichtete Separatoren realisiert werden, wie in DE 10 208 277 A1 beschrieben. Die Wirkung ist jedoch begrenzt und erhöht zudem die Kosten für die Herstellung des Separators.

Aufgabe der vorliegenden Erfindung ist es, die oben genannten Nachteile der Verfahren des Standes der Technik zu vermeiden und eine kontaminationsfreie, reproduzierbare, kostengünstige, zuverlässige Vakuum-Elektrolyt-Befüllung für elektrochemische Energiespeicher wie Batterien, Akkumulatoren und Superkondensatoren ("Supercaps") vom formflexiblen Pouch-Zellen-Typ bereitzustellen, die für alle (d.h. auch sehr korrosive bzw. reaktive) Arten von Flüssigelektrolyten geeignet ist und die ohne zusätzliche Vorrichtungsmodifikationen wie spezielle Rohr- oder Mundstückkonstruktionen oder Materialmodifikationen wie Beschichtungen oder Elektrolytadditive realisiert werden kann.

Gelöst wird die Aufgabe durch ein Verfahren zum Befüllen eines Batterie- oder Akkumulator-Folienbeutels mit Flüssigkeit und Verschließen dieses Beutels, umfassend die Schritte:
(a) Bereitstellen eines flexiblen Folienbeutels, in dessen Innenraum sich die festen Bestandteile der Batterie oder des Akkumulators befinden, wobei der Folienbeutel mit Ausnahme eines abdichtbaren Zugangs für Flüssigkeit dicht verschlossen ist,
(b) Einbringen des Folienbeutels in eine gasdicht verschließbare Kammer und gasdichtes Verschließen der Kammer,
(c) nach Schritt (b) Erzeugen eines Unterdrucks im Folienbeutel,
(d) dichtendes Verbinden des Flüssigkeitszugangs am Folienbeutel mit einem Flüssigkeitsvorrats-Gefäß über eine Verbindungsleitung,
(e) nach Schritt (d) vollständiges Befüllen des Beutel-Innenraums mit Flüssigkeit über die Verbindungsleitung und
(f) hermetisches Verschließen des Folienbeutels durch Setzen einer Naht, wobei entweder
   (i) die Naht so gesetzt wird, dass hierbei der mit der Verbindungsleitung verbundene Flüssigkeitszugang vom Innenraum des Folienbeutels getrennt wird und die Verbindungsleitung anschließend aus dem Flüssigkeitszugang gelöst wird,
      oder
   (ii) sich die Naht durch die Verbindungsleitung erstreckt,
      und
(g) Abtrennen von außerhalb der Naht liegenden Folien- und/oder Verbindungsleitungs-Teilen.

Bevorzugt folgen die Schritte (c) bis (e) in der angegebenen Reihenfolge aufeinander.

Bevorzugt handelt es sich in Schritt (d) um das dichtende Verbinden des Flüssigkeitszugangs am Folienbeutel mit der Verbindungsleitung, die zu dem Flüssigkeitsvorrats-Gefäß führt.

Bevorzugt handelt es sich in Schritt (f) um das hermetische Verschließen des Folienbeutels durch Setzen einer Naht, durch die der Flüssigkeitszugang vom Innenraum des Folienbeutels getrennt wird, gefolgt von den beiden Schritten (g) Abtrennen des oder der außerhalb der Naht liegenden Folienteile und (h) Ablösen der Leitung aus dem Flüssigkeitszugang in beliebiger Reihenfolge.

Die beiden zuletztgenannten bevorzugten Ausführungsformen werden stärker bevorzugt kumulativ verwirklicht, besonders bevorzugt in Kombination mit der als bevorzugt angegebenen Reihenfolge der Schritte (c) bis (e).

Die Erfindung eignet sich insbesondere für Batterien, Akkumulatoren und Supercaps in LithiumTechnologie, die mit Elektrolytflüssigkeit beaufschlagt werden müssen.

Der Folienbeutel kann vor oder nach dem Verbinden seines Flüssigkeitszugangs mit der zum Flüssigkeitsvorrats-Gefäß führenden Leitung in die gasdicht verschließbare Kammer eingebracht werden.

Alle in den beigefügten Unteransprüchen definierten Ausführungsformen können in bevorzugter Weise mit den voranstehend als bevorzugt genannten Ausführungsformen kombiniert werden.

In der Regel sind im bereitgestellten Folienbeutel die Kathode(n) und die Anode(n) mit einem Ableiter verbunden, der durch eine bereits verschweißte Naht des Folienbeutels geführt ist derart, dass die Kathode(n) und Anode(n) von außen elektrisch ankontaktierbar ist/sind.

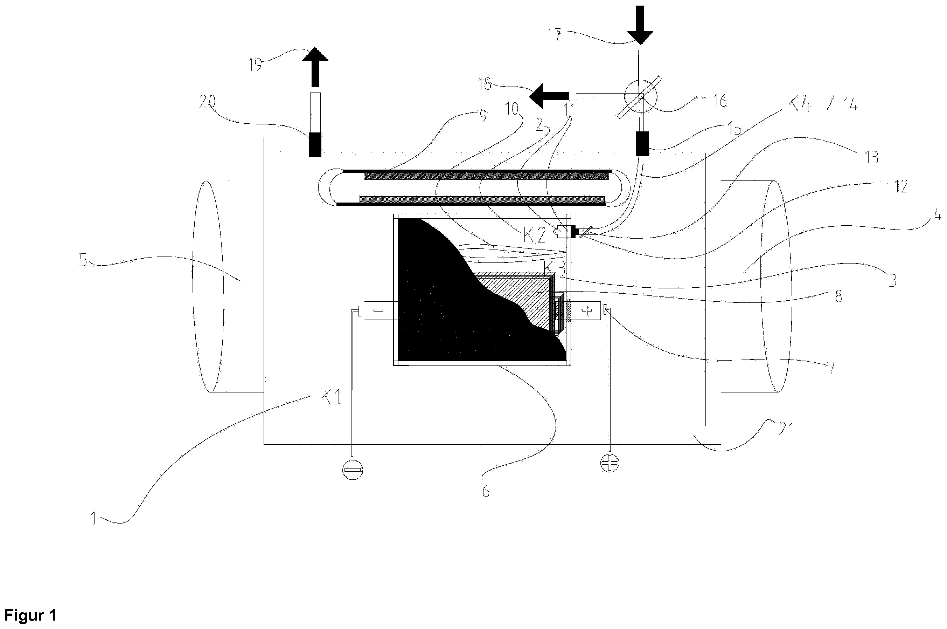

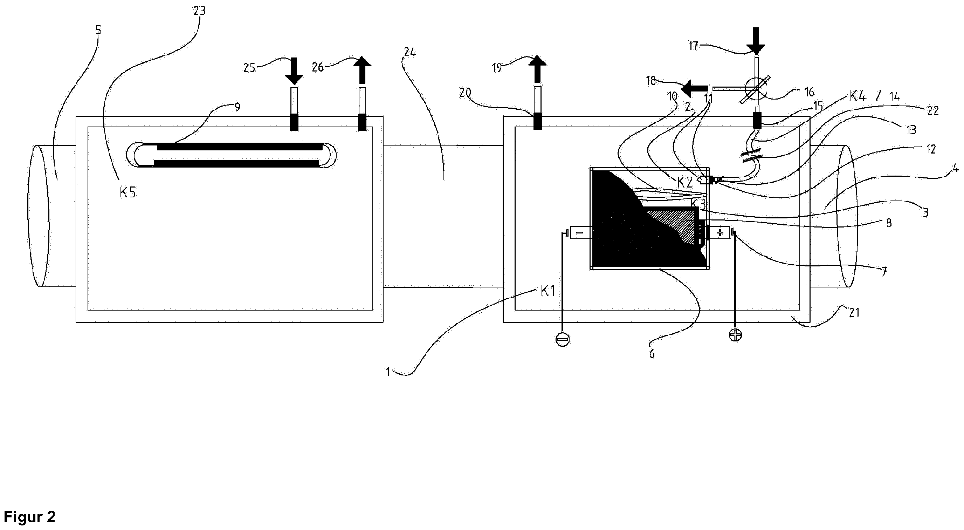

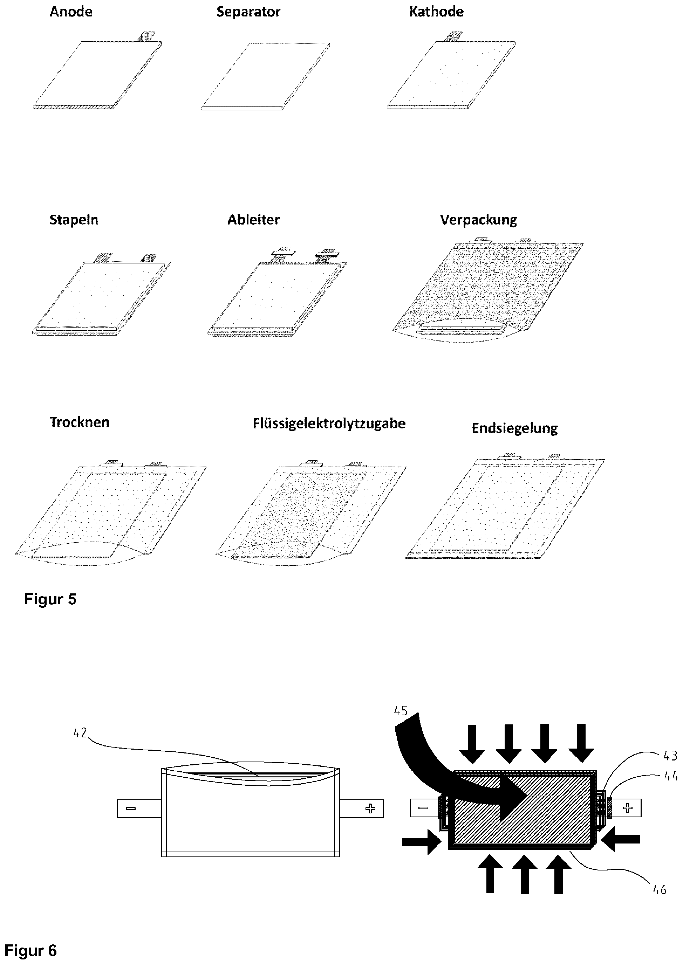

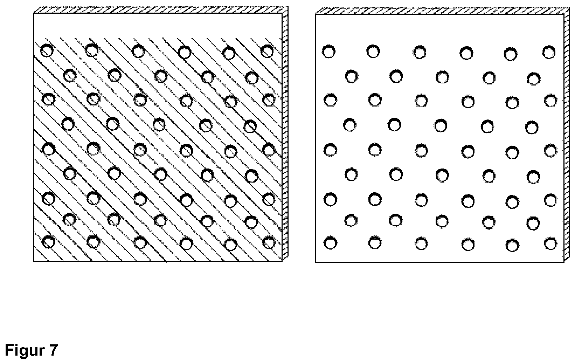

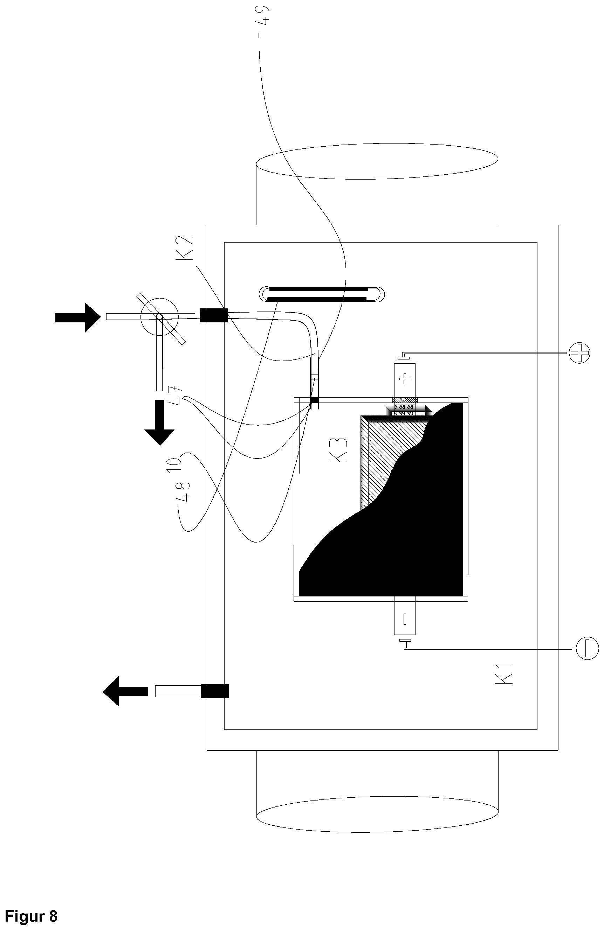

In den der Anmeldung beigefügten Figuren:
zeigt **Figur 1** den schematischen Aufbau einer Kammer, in welcher der Folienbeutel gemäß Variante (i) in Schritt (f) des Verfahrens der Erfindung befüllt und verschlossen wird. Mit K1 ist die gasdicht verschließbare Kammer bezeichnet, mit K2 das gesamte Zellinnere vor dem Verschließen des Beutels und mit K3 das verbliebene Kompartiment nach erfolgter Befüllung und Versiegelung. Die Versiegelung erfolgt in dieser Ausführungsform innerhalb der Kammer K1;.
zeigt **Figur 2** eine alternative Ausführungsform der Variante (i) mit einer außerhalb der Kammer liegenden Siegelstation zur Trennung des Kompartiments K1 vom Kompartiment K3;
ist in **Figur 3** eine Vakuumelektrolytbefüllung mit anschließender Präformierung und doppelter Siegelung schematisch gezeigt;
zeigt **Figur 4** eine vorbereitete Pouch-Zellen-Tüte mit einer dreiseitigen Siegelnaht inklusive dem eingelegten Zellkörper. Die vierte Siegelnaht erfolgt gemäß der Erfindung durch den Verfahrensschritt (f) und liegt aufgrund der Gegebenheiten dieses Verfahrens (die Leitung im Flüssigkeitszugang reicht häufig durch diesen hindurch in das Innere; außerdem soll eine vorherige, äußere Siegelung möglich sein, wie weiter unten näher beschrieben) meist nicht ganz am Außenrand der Tüte;
sind in **Figur 5** die grundlegenden Schritte des Herstellungsverfahrens von Lithium-Polymer-Akkumulatoren in Pouch-Zellen-Ausführung schematisch gezeigt; die vorliegende Erfindung betrifft eine spezifische Ausgestaltung nur der letzten beiden Schritte;
sind aus **Figur 6** die Eindringwege für Elektrolyte bei der Befüllung von Pouch-Zellen-Akkumulatoren ersichtlich. Man erkennt, dass nur ein relativ kleiner Eindringquerschnitt zur Verfügung steht, weshalb eine lange Diffusionsstrecke für den Elektrolyten zurückzulegen bzw. zu überwinden ist;
zeigt **Figur 7** eine perforierte Elektrodenfolie (rechts: unbeschichtet, links: beschichtet) und mit unbeschichtetem Randbereich (oben), die für eine spezifische Ausführungsform der Erfindung vorgesehen ist;
zeigt **Figur 8** den schematischen Aufbau einer Kammer, in welcher der Folienbeutel gemäß Variante (ii) in Schritt (f) der Erfindung befüllt und verschlossen wird. Mit K1 ist die gasdicht verschließbare Kammer bezeichnet und mit K3 das verbliebene Kompartiment nach erfolgter Befüllung und Versiegelung. Die Versiegelung erfolgt in dieser Ausführungsform im Bereich des verlängert ausgeführten Adapters innerhalb der Kammer K1; unter Verzicht auf einen Adapter kann die Siegelnaht statt dessen in der Verbindungsleitung selber gesetzt werden.

Die Erfindung wird nachstehend unter Bezugnahme auf die Figuren, vor allem Figur 1 und Figur 8, näher erläutert, wobei die Bezugnahme ausschließlich zum besseren Verständnis, aber keinesfalls als Beschränkung auf die konkreten Merkmale dieser Figuren erfolgt.

Die Erfindung beruht auf dem Gedanken einer strikten räumlichen Trennung der Umgebung der zu befüllenden Zelle (d.h. des im Beutel befindlichen Lithiumakkumulators), die gasdicht sein sollte und zum Beispiel als Glovebox 21 (geschlossene Kammer mit Handschuh-Zugang) ausgeführt sein kann, und dem Folienbeutel 6 mit dem Zellkörper 8 (Lithiumakkumulator) selbst. Damit werden zwei diskrete, vorzugsweise separat druckregulierbare Kompartimente K1 und K2 (Figuren 1 und 2) bereitgestellt. Dieser Aufbau wird durch eine feste Verbindung zwischen dem Flüssigkeitsvorrats-Gefäß und dem Zellinneren über eine Verbindungsleitung, auch als Elektrolyt(zu)leitung bezeichnet, hergestellt, derart, dass das Zellinnere mit der Leitung zusammen eine diskrete Kammer darstellt. Beide Kompartimente K1 und K2 sind hermetisch voneinander getrennt und können separat voneinander evakuiert und optional mit Schutzgas geflutet werden.

Für das erfindungsgemäße Verfahren ist es erforderlich, dass der Folienbeutel einen abdichtbaren Flüssigkeitszugang für den Anschluss an eine Leitung zum Einbringen des Flüssigelektrolyten aufweist. Dieser kann beispielsweise in einer der Nähte, insbesondere der Kopf(siegel)naht, wenn z.B. der Folienbeutel aufrecht befüllt werden soll, angeordnet sein.

Dabei wird im Ausführungsbeispiel der Figur 1 ein vakuumdichter Adapter in eine vakuumdicht eingebrachte, adaptierbare Durchführung 11, beispielsweise eine Naht und vorzugsweise die Kopfsiegelnaht 12 der Pouch-Folien-Verpackung, eingeschweißt ("erste Ausführungsform"). Als Adapter kann ein beliebiges, bevorzugt genormtes Verbindungssystem eingesetzt werden, das vorzugsweise aus dem Adapter selbst in Kombination mit einem an einen Schlauch anschließbaren oder integral damit gebildeten Einsatzstück bestehen oder diese Teile umfassen kann. Ein Beispiel hierfür ist das kommerzielle "Luer-Lock"-System, bei dem die Dichtung durch eine kegelförmige Konstruktion gewährleistet wird. In einer zweiten Ausführungsform des Adapters kann dieser eine längliche Form, beispielsweise mit gleichbleibendem Durchmesser besitzen, die sich durch eine geeignete Siegelnaht der Pouch-Folien-Verpackung erstreckt, oder ein Kunststoffring sein, wobei der Adapter so ausgestaltet ist, dass er einen Kunststoffschlauch dichtend aufnehmen kann. Auch in dieser Ausführungsform wird der Adapter in der Regel in eine Siegelnaht des Folienbeutels eingeschweißt. In einer dritten Ausführungsform wird kein separater Adapter eingesetzt; vielmehr ist das Ende eines Schlauchs in den offengehaltenen Teil einer Siegelnaht des Folienbeutels eingeschweißt. Der Flüssigkeitszugang kann jedoch auch anderweitig realisiert werden, beispielsweise durch ein auf die Pouch-Folie geklebtes Septum, das zusammen mit einer Kanüle Verwendung finden kann. In einer weiteren Variante wird eine dünne Kanüle durch den geöffneten Teil der Tüte/des Beutels geführt und durch zwei mit elastischem Material versehene Klemmbacken eingepresst, so dass eine gasdichte Abtrennung des Zellinnern von der Umgebungsatmosphäre gewährleistet ist.

Die Anordnung des Flüssigkeitszugangs kann vor oder nach einem optionalen Trocknungsschritt des Zellkörpers im Rahmen des Gesamtprozessablaufs erfolgen, wie er in **Figur 5** ganz allgemein gezeigt ist. Das Befüllverfahren selbst kann unter Normalatmosphäre ausgeführt werden. Wichtig ist der Ort des Flüssigkeitszugangs, da in einem späteren Schritt gemäß Variante (f) (i) der Erfindung der Bereich K2 (Figuren 1 und 2), in dem der Adapter 12 angebracht wurde, durch eine Siegelung vom Rest des Zellkörpers K3 getrennt werden muss, zumindest aber in allen Fällen der Pegel der Elektrolytflüssigkeit nicht bis auf die Höhe des Flüssigkeitszugangs reichen darf. Bei stehender Flüssigkeitsaufnahme befindet er sich bevorzugt oben oder in einem oberen seitlichen Bereich des Beutels, insbesondere in einer in dieser Anordnung seitlich befindlichen Naht, die, wie oben erwähnt, die Kopfnaht sein kann.

Die gasdichte, vorzugsweise evakuierbare Kammer 21 wird für die stehende, ggf. aber auch liegende Aufnahme der mit den Akkumulator-Zellen versehenen Beutel (der "Pouch-Zell-Körper") vorbereitet.

Im Folienbeutel 6 wird ein Unterdruck erzeugt, bevor die Befüllung mit Flüssigkeit erfolgt. Dies kann entweder über eine Evakuierung der Kammer 21 erfolgen, sofern die Kompartimente K1 und K2 (Figuren 1 und 2) noch nicht durch das Verbinden des Flüssigkeits-Vorratsgefäßes mit dem Beutel-Innenraum über die Verbindungs- bzw. Elektrolytleitung 14, z.B. durch das Einsetzen dieser Leitung in den Flüssigkeitszugang 12, getrennt sind, oder auf andere, nachstehend beschriebene Weise. Bevorzugt wird sodann das Vakuum im Folienbeutel 6 erst einmal durch die Einleitung von Schutzgas (vorzugsweise einem trockenen Inertgas wie Stickstoff oder Argon) gebrochen, und ggf. wird die Evakuierung sogar mehrmals wiederholt und das Vakuum jeweils wiederum mit Schutzgas gebrochen, um einen kompletten Austausch des Gasvolumens in der Zelle durch trockenes Inertgas zu garantieren und ein Trocknungseffekt zu erzielen. Hierfür kann eine Verbindung (Leitung) 19 dienen, die mittels einer vakuumfesten Durchführung 20 durch die Wand der Kammer 21 zu einem Vakuum, vorzugsweise einer druckregulierbaren Vakuumpumpe, führt.

Die Kammer 21 selbst ist vorzugsweise mit zwei vakuumfesten Durchführungen 4,5 ausgestattet, deren eine (4) zur Bestückung der Vorrichtung mit zu befüllenden Zellen und deren andere (5) zum Ausbringen der Zellen nach dem Befüll- und ggf. Verschließvorgang vorgesehen ist. Innerhalb der Kammer steht die genannte Elektrolytleitung 14 zur Verfügung, die flüssigkeitsdicht, vorzugsweise auch gasdicht mit dem Flüssigkeitszugang im Folienbeutel verbunden, z.B. an diesen angeschlossen sein bzw. werden kann und über die Verbindung 17 mit einem Vorratsbehälter oder Dosiergefäß für die Elektrolytflüssigkeit verbunden ist bzw. wird. Diese Elektrolytleitung ist in der ersten und zweiten Ausführungsform des Adapters in der Regel ein Schlauch mit Abmessungen, die ein dichtendes Einführen in den Adapter bzw. das Einsatzstück des Adapters ermöglichen; dieser Schlauch ist bereits über die Verbindung 17 mit dem Vorratsbehälter verbunden. In der dritten Ausführungsform wird die Elektrolytleitung selbst, in der Regel in Form eines Kunststoffschlauchs, schon zuvor in eine Siegelnaht der Folienverpackung eingeschweißt; in dieser Ausführungsform wird sie dann nachträglich an den Vorratsbehälter für die Elektrolytflüssigkeit angeschlossen. Nach der erfolgten Befüllung und dem bevorzugt durchgeführten Verschließen eines fakultativ vorhandenen Absperrhahns 13 zur Abtrennung von Kompartiment K2 (Figuren 1 und 2) bildet das Innere dieser Leitung ein viertes Kompartiment K4. Der Vorratsbehälter (in Figur 1 nicht gezeigt) kann sich innerhalb oder außerhalb der Kammer befinden; aus Gründen der Dichtigkeit der Kammer 21 ist es günstig, wenn er innen angeordnet ist. Auch für die dritte Ausführungsform ist eine Anordnung im Inneren der Kammer zwar nicht zwingend, aber die Regel, denn nur dann kann eine unaufwändige Verbindung der eingeschweißten Elektrolytleitung mit dem Vorratsbehälter vorgenommen werden; wenn sich der Vorratsbehälter dagegen außerhalb der Vakuumkammer befindet, muss sie durch eine Schleuse nach außen "gefädelt" werden, um den Anschluss zu bewirken. Wenn sich der Vorratsbehälterdennoch außerhalb der Kammer 21 befindet, ist er in jedem Falle über eine vakuumfeste Durchführung 15, z.B. die genannte Schleuse, zugänglich, durch die sich die Elektrolytleitung 14 nach außen erstreckt.

In einer bevorzugten Ausführungsform der Erfindung kann die Verbindung zum Vorratsbehälter verschlossen/getrennt werden, und die Elektrolytleitung 14 steht außerdem mit einer Vakuumquelle in ebenfalls trennbarer Verbindung (Bezugsziffer 18). Dies gelingt beispielsweise mit Hilfe eines Dreiwege-Hahns mit L-Bohrung 16. In dieser Ausführungsform, in der die Verbindung zwischen der Leitung 14 und dem Zugang 11, 12 vorzugsweise zumindest einigermaßen gasdicht ausgestaltet sein sollte, kann der Unterdruck im Folienbeutel durch Verbinden des abdichtbaren Zugangs am Folienbeutel mit der genannten Leitung und dem Öffnen der Leitung zur Vakuumquelle hin erzeugt werden, worauf die Leitung zur Vakuumquelle hin verschlossen und mit dem Flüssigkeitsvorrat verbunden wird, um den Beutel-Innenraum mit Flüssigkeit zu befüllen. Steht die genannte Leitung außerdem mit einer Schutzgasquelle in abschließbarem Kontakt, kann auf diese Weise abwechselnd evakuiert und mit Schutzgas gespült werden, wie voranstehend beschrieben. Diese Schutzgasspülung kann z.B. durch einen zusätzlichen Dreiwegehahn in der Vakuumleitung realisiert werden.

Bereits zuvor kann der Druck in der gasdicht verschließbaren Kammer 21 in geeigneter Weise eingestellt worden sein. Insbesondere kann ein Vakuum angelegt sein. Dieses kann entweder mit Hilfe der beschriebenen Vakuum- und späteren Flüssigkeits-Leitung 14 eingestellt werden, solange diese Leitung noch nicht in den Zugang am Folienbeutel eingebracht wurde. Alternativ kann die Kammer 21 mit einer separaten Vakuumeinrichtung in Verbindung stehen wie oben beschrieben und durch diese evakuiert werden. Ein besonderer Vorteil des letztgenannten Aufbaus ist es, dass durch ein gleichzeitiges Evakuieren von Kammer und Beutel oder durch ein Evakuieren der Kammer 21 vor dem Anlegen des Vakuums im Beutel ein sehr niedriger Enddruck im Folienbeutel erzeugt werden kann, da ggf. vorhandene Undichtigkeiten im Bereich des Zugangs am Folienbeutels (z.B. Adapters) nur kleinen relativen Druckunterschieden ausgesetzt sind. Außerdem ist eine separate Vakuum-Leitung für die Kammer 21 günstig, wenn die Flüssigelektrolyt-Leitung einen nur kleinen Schlauch-Innendurchmesser aufweist, weil in diesem Fall die Druckreduktion bei unterstützender Umgebungsdruckreduktion schneller erfolgt, was große Vorteile für die Taktzeiten hat.

Nach den oben beschriebenen Vorbereitungen, insbesondere der Reduktion des Zellinnendruckes (Druckbedingungen in K2 (Figuren 1 und 2)) und ggf. nach gleichzeitiger Reduktion des Umgebungsdrucks, d.h. des Drucks in der umgebenden Kammer (Druckbedingungen in K1) beginnt die Ektrolytbefüllung. Hierfür wird ggf. der zum Evakuieren des Zellinneren genutzte Vakuum-Anschluss (18 bwz. 19) geschlossen und die Verbindung zwischen der Flüssigelektrolyt-Leitung und einem Elektrolytvorratsbehälter geöffnet (16). Aufgrund des Unterdrucks im Folienbeutel wird der Elektrolyt dabei "freiwillig" in die evakuierten Poren der Elektroden- und Elektrolytfolien des Batterie- oder Akkumulatorkörpers 8 hinein gezogen. Bei Bedarf kann der Druck in der umgebenden Kammer 21 (K1) geringfügig (z.B. zwischen 100 mbar und 800 mbar) erniedrigt werden, um ein zügiges Einziehen des Elektrolyten in das Zellinnere zu begünstigen. Die sensible Einstellung des Druckes im Kompartiment K1 stellt sicher, dass es je nach verwendetem Elektrolytsystem zu einem zügigen Einziehen des Elektrolyten, aber nicht zu einem unerwünschten Verdampfen von Lösungsmittelbestandteilen kommt.

Durch die formflexible Pouch-Zell-Ausführung der elektronischen Speicherelemente hat eine relative Druckveränderung zwischen den einzelnen Kompartimenten Einfluss auf die Drucksituation im jeweils anderen Kompartiment. Durch die Druckbedingungen in Kompartiment K1 kann die Eindringgeschwindigkeit des Elektrolyten in das Zellinnere eingestellt werden und die Dosierung ohne eine Zwangsführung, z.B. eine wartungs- und reparaturanfällige Elektrolytpumpe, erfolgen.

In einer bevorzugten Ausführungsform wird der Elektrolyt aus einem Vorratsgefäß in ein Puffergefäß dosiert (zum Beispiel per volumetrischer Skala oder per Durchflussmessgerät). Das Puffergefäß zeichnet sich z.B. dadurch aus, dass es durch den Elektrolytverbrauch geleert wird derart, dass das Totvolumen in der Elektrolytleitung zum Ende der Befüllung mit dem Inertgas, das das Puffergefäß überdeckt hat, gefüllt ist. Die Verbindung zum Puffergefäß wird dabei bevorzugt exakt in dem Moment geschlossen, wenn der Meniskus des Elektrolytspiegels am abdichtbaren Zugang am Folienbeutel angekommen ist.

Nach dem Befüllen des Beutels mit der vorzugsweise dosierten Elektrolytmenge wird dieser durch das Anbringen einer Siegelnaht 10 o.ä. verschlossen, die geometrisch so angebracht wird, dass dabei entweder der Zugang für Flüssigkeit vom Innenraum des Folienbeutels getrennt wird (Variante (i) in Schritt (f)) oder dass dabei die Elektrolytleitung selbst verschlossen wird (Variante (ii) in Schritt (f)). Damit wird das Kompartiment K3 vom Kompartiment K2 (Figuren1 und 2) getrennt. Dies kann beispielsweise durch das Vorsehen einer Siegelstation 9 innerhalb der Kammer 21 oder außerhalb der Kammer (z.B. in einer weiteren, vorzugsweise schutzgasgeschützten Kammer 23 (Kompartiment K5), die von der Kammer 21 aus über eine vorzugsweise vakuumfeste Durchführung 24 zugänglich ist und eine Schutzgaszuführung bzw. Zuleitung einer Gaswäscheeinrichtung 25 sowie eine Absaugung bzw. Zuleitung zur Gaswäscheeinrichtung 26 aufweisen kann, siehe Figur 2) erfolgen. Im letzteren Falle sollte dabei die Elektrolytleitung so lang und flexibel ausgestaltet sein, dass sie auch bei der Entfernung des Folienbeutels vom Ort der Befüllung noch im abdichtbaren Zugang verbleiben kann, siehe Bezugsziffer 22 in **Figur 2****.** Wenn beim Siegeln die Elektrolytleitung selbst verschlossen wird, kann dies je nach Ausgestaltung unterschiedlich erfolgen: Wenn der Flüssigkeitszugang des Folienbeutels einen Adapter aufweist, in den ein Schlauch dichtend eingebracht wurde, kann die Siegelnaht entweder auf Höhe der Siegelnaht der Folienverpackung angebracht werden derart, dass sich anschließend eine durchgehende Siegelnaht über die Länge der Verpackung erstreckt, oder sie kann weiter außerhalb und damit außerhalb des Folienbeutels gesetzt werden, wie in Figur 8 gezeigt. Dabei wird dieser Adapter zerstört, so dass es sich bei ihm in dieser Ausführungsform vorzugsweise um ein kostengünstig herstellbares, siegelbares Kunststoff-Röhrchen oder dergleichen handelt.

Ähnliches gilt für den Fall, dass kein Adapter vorhanden ist und der Schlauch in die Siegelnaht der Folienverpackung eingeschweißt wurde. In diesem Fall wird nach dem Siegeln die Verbindung zwischen dem Schlauch und dem Vorratsbehälter für Flüssigkeit zu einem geeigneten Zeitpunkt wieder getrennt.

Nach dem Anbringen der Siegelnaht o.ä. liegt ein vollständig im Folienbeutel eingeschlossenes elektrochemisches Speicherelement, beispielsweise ein Akkumulator vor. Dieser kann durch Abtrennen des außerhalb der Naht liegenden Folienteils und/oder außerhalb der Naht liegender Teile von Adapter und/oder Schlauch fertiggestellt werden. Sofern die Siegelnaht den Zugang für Flüssigkeit vom Innenraum des Folienbeutels getrennt hat, wird die angeschlossene Leitung aus dem abzutrennenden oder dem abgetrennten Teil entfernt, so dass die Flüssigelektrolyt-Leitung - in voller Länge - für weitere Befüllvorgänge wieder zur Verfügung steht. Auch ein ggf. vorhandener, durch Siegeln nicht zerstörter Adapter kann wiederverwendet werden. Sofern die Siegelnaht durch den Adapter bzw. den als Elektrolytleitung verwendeten Schlauch hindurchgeführt wurde, aber kein inneres Kompartiment des Folienbeutels abgetrennt hat, kann dieser oberhalb der Siegelnaht abgetrennt, z.B. abgeschnitten werden. Das Abtrennen der genannten, außerhalb der Naht liegenden Teile kann allerdings in den - häufigen - Fällen auf einen späteren Zeitpunkt verschoben werden, in denen, wie weiter unten beschrieben, die Zelle anschließend gezykelt und dann nochmals gesiegelt wird. Nach diesem letzteren Siegelschritt wird nämlich außerhalb der dann entstandenen Naht liegende Folie vom Folienbeutel abgetrennt; es ist zwar möglich, aber nicht notwendig, diesen Trennschritt separat zum voranstehend geschilderten durchzuführen. Vielmehr können die überflüssigen oder störenden Teile des Folienbeutels und ggf. der Adapter oder Teile davon bzw. ein überstehender Teil der Elektrolytleitung dann in einem einzigen Schritt abgetrennt werden.

Die voranstehend erläuterte Erfindung führt zu einem mit Elektrolyt vorteilhaft benetzten und durchsetzten Zellkörper, da das erfindungsgemäße Verfahren einen sehr geringen erreichbaren Enddruck ermöglicht. Eine Kontamination der Umgebung der Zelle und Verdampfen von Lösungsmittelbestandteilen des Elektrolyten ist durch das Befüll-Prinzip mit diskreten Kompartiments ausgeschlossen. Der gesamte Akkumulator geht darüber hinaus absolut gasfrei aus dem Verfahren hervor und garantiert so einen hohen mechanischen Zusammenhalt der Schichten und vorteilhafte elektrochemische Eigenschaften bei der sich in der Regel anschließenden Formierung des Akkumulators.

Das oben beschriebene Verfahren kann an einzelnen Zellen/Folienbeuteln ausgeführt werden. In einer spezifischen Ausführungsform werden mehrere Zellen/Folienbeutel parallel in ein und derselben Kammer befüllt, wobei für jede dieser Zellen/Folienbeutel eine separate Flüssigkeitsleitung vorgesehen sein muss. In einer anderen spezifischen Ausführungsform werden die Zellen/Folien kontinuierlich befüllt und nach dem Befüllen automatisiert zu einer Siegelstation transportiert, und nach dem Abtrennen der äußeren Teile hinter dieser Siegelstation werden die Flüssigkeitsleitungen ggf. automatisiert wieder in die erste Kammer zurückgezogen.

Wie oben ausgeführt, sind Anode(n) und Kathode(n) des Batterie- bzw. Akkumulatorstacks über Ableiter, die durch die Folienverpackung hindurchreichen, elektrisch ankontaktierbar. Diese Ableiter sind in den Figuren meist mit ihrer jeweiligen Polung (+ bzw. -) dargestellt. Es handelt sich bei ihnen in der Regel um dünne Metallbleche, die an die Stromsammler der Elektroden angeschweißt oder anderweitig mit diesen verbunden oder einstückig mit ihnen ausgebildet sind. Auch können die Stromsammelbleche so ausgestaltet sein, dass sie sich zum Zwecke der Ankontaktierung durch die Naht oder Wand der Pouch-Folienverpackung erstrecken. In einer spezifischen Ausführungsform der Erfindung werden die nun verpackten und fertigen Akkumulatoren mit Hilfe dieser Ableiter entweder vor oder nach dem Abtrennen der außerhalb der neu gesetzten Siegelnaht befindlichen Folienteile präformiert. Hierfür werden die Ableiter über eine Einrichtung zur Präformierung 7 (Figuren 1 und 2) ankontaktiert und mit einem Potential derart beaufschlagt, dass sich die Zelle ein oder sogar mehrmals auf- und entlädt. Bei diesem ersten bzw. diesen ersten Zyklen der Ladung und Entladung treten Reaktionen des Elektrolyten mit der Oberfläche der Elektroden auf, die dabei eine Passivierungsschicht erhält. Dabei kann es ggf. auch zu einer Gasbildung kommen. Wenn die Zellen dabei immer noch oder wiederum aufrecht stehen, steigen die Gasblasen nach oben. In bevorzugter Weise wird daher anschließend an das Präformieren eine weitere Siegelnaht angebracht, und zwar unterhalb der oberen Siegelnaht und mit einem solchen Abstand zu dieser, dass sich nach dem Siegeln keine Gasblasen mehr im verbleibenden Akkumulator-Folienbeutel befinden. Diese Ausführungsform ist in **Figur 3** dargestellt. Darin erkennt man eine evakuierbare Kammer 39 mit einer Verbindung 27 zu einer Vakuumpumpe und zur Schutzgasversorgung, in der sich ein Zellkörper (Akkumulatorstapel) 31 innerhalb einer teilweise verschlossenen Pouchfolie mit Siegelnähten 32 befindet. Die Befüllung erfolgt gemäß dieser Figur nicht erfindungsgemäß, sondern über eine spritzenförmige Befüllvorrichtung 28 mit Elektrolytleitung 29 und druckfester Durchführung durch die Kammerwand mit Absperrventil 30. Für die hier beschriebene Ausführungsform der Erfindung von Bedeutung sind die Anoden- und Kathodenableitbleche 33. Diese werden über die Präformier-Einrichtung 404 ankontaktiert. Nach dem Präformieren wird unterhalb der ersten Siegelnaht 38 eine zweite Siegelnaht 36 gesetzt, um möglicherweise entstandene Gasblasen abzutrennen, und die Pouch-Folie wird zwischen den beiden Siegelnähten 38 und 36 durchtrennt. Diese Schritt kann, wie oben erläutert, das Abtrennen des oder der außerhalb der ersten Naht liegenden Folien- und/oder Leitungsteile umfassen.

Die Kombination von Präformierung mit dem erfindungsgemäßen Verfahren ist besonders günstig, da ein Eindringen von verdampfenden, organischen Lösungsmitteln in die Umgebungskompartiments (z.B. K1 in Figur 1) ausgeschlossen ist. Dieser Umstand ist insbesondere geeignet, um die apparativen Aufwendungen, die nach den ATEX-Richtlinien getroffen werden müssen, sehr gering zu halten.

In einer weiteren Ausgestaltung des erfindungsgemäßen Verfahrens lässt sich die gesamte Befüll-Einrichtung in der Schleuse einer handelsüblichen Glovebox mit wenig Aufwand integrieren. Dabei kann die Siegeleinheit, wie beim Akkumulator-Bau üblich, auch innerhalb der Glovebox aufgestellt werden.

In einem Ausführungsbeispiel der Erfindung, das mit allen anderen Ausführungsformen kombiniert werden kann, sind die Adapter als Luer-Lock-Anschlüsse aus PE oder PP ausgeführt und werden mittels einer speziell geformten Siegelschiene in die Siegelnaht eingeschweißt.

In einer spezifischen, vorteilhaften Ausgestaltung des beschriebenen Elektrolytbefüllverfahrens, die mit allen vorbeschriebenen Ausführungsformen kombinierbar ist, werden anstelle der Verwendung von Elektroden, die auf geschlossenen Metallfolien abgeschieden wurden, Elektroden verwendet, die auf mit Öffnungen versehenen Metallfolien abgeschieden wurden. Gitterförmige Stromableiter sind aus dem Stand der Technik bekannt, siehe beispielsweise GB 2 329 513 A. Der Vorteil liegt einmal in einer Gewichtsreduktion des Stromableiters, was einen Vorteil bei der gravimetrischen Energiedichte mit sich bringt, und zum zweiten ist eine mit Öffnungen versehene Metallfolie manchmal elastischer und kann daher den Volumenänderungen während Interkalation und Deinterkalation des Lithiums leichter folgen, ohne dass es zu einer Delamination des Elektrodenmaterials kommt. Ein dritter Vorteil liegt in der Erleichterung des Eindringens des Flüssigelektrolyten in den Batterie- bzw. Akkumulatorkörper. Mit Öffnungen versehene Metallfolien sind in der Regel auch direkt beschichtbar.

Zur Herstellung der Öffnungen werden die Metallfolien perforiert, beispielsweise mit mechanischen Stanzwerkzeugen oder mit Lasern. Diese Perforation erfolgt mit Blick auf die Viskosität der aufzutragenden pastösen Elektrodenmasse in der Weise, dass die Lochgrößen so gestaltet werden, dass es während des Beschichtungsprozesses nicht zu einem Durchtritt der pastösen (Guss-)Masse durch die Öffnungen kommt, was zur Verunreinigung von Walzen bzw. zum Durchtropfen noch nicht getrockneter Beschichtungsmasse in der Trocknungsstrecke der Beschichtungsanlage führen würde. Dies lässt sich durch die geeignete Einstellung der Viskosität der pastösen Masse in Relation zur Lochgröße der Perforation und zur Dichte der Löcher der Perforation sicherstellen. Werden beispielsweise pastöse Massen mit rheologischen Eigenschaften, die sich durch Herschel/Bulkey-Indizes (Fließgrenze zwischen 2 und 20 1/s), Fließkoeffizient zwischen 0,1 und 1,0 und Index zwischen 0,6 und 0,9) beschreiben lassen, eingesetzt, liegen geeignete Lochdurchmesser bei zwischen etwa 5 µm und 500 µm. Vorteilhaft lassen sich pastöse Massen auf Basis von leicht flüchtigen organischen Lösungsmitteln einsetzen. Diese Art der Perforation kann zudem so gestaltet werden, dass die perforierten Bereiche so angeordnet werden, dass außerhalb der beschichteten Bereiche keine Perforation erfolgt. Dieses erlaubt ein deutlich partikelfreieres Prozessieren beim formgebenden Schneiden der Elektrodenfolienelemente zum Aufbau der Zelle bzw. bei Schweißungen an nicht beschichteten Bereichen zur Verbindung von Folienelementen bzw. zur Verbindung mit Durchführungselementen (Tabs in der Siegelnaht in Figur 1) mit dem Batterie- bzw. Akkumulatorkörper.

Mit der Erfindung lässt sich eine kontaminationsfreie, reproduzierbare, produktivere, kostengünstige und zuverlässige Vakuumelektrolytbefüllung für Batterien und Akkumulatoren vom Pouch-Zellen-Typ unter definierten Druckbedingungen realisieren, und zwar bei frei wählbarem Elektrolytsystem (die vielen gängigen und dem Fachmann bekannten Systeme besitzen bekanntlich unterschiedliche Schmelzpunkte, Siedepunkte, Dampfdrücke und Viskositäten). Wichtig dabei sind die hermetische Trennung der verschiedenen Kompartimente und die unabhängig voneinander einstellbaren Druckbedingen in diesen Kompartimenten. Die Kompartimente sind durch eine Pouch-Folie getrennt, die formflexibel ist und Druckeinwirkungen nachkommt.

Das Verfahren der Erfindung ist zwangsförderungsfrei (d.h. es benötigt keine Pumpe), kontaminationsfrei (durch die Trennung der verschiedenen Kompartimente) und hocheffektiv (aufgrund des verbesserten Eindringens des Elektrolyten in die Poren der Akkumulatorschichten und wegen der niedrigeren erreichbaren Enddrücke). Der dabei verwendete Aufbau ist genauso kostengünstig wie die benötigten Verbrauchsmaterialien; er ist darüber hinaus wenig verschleißanfällig. Das Verfahren kann mit beliebigen Zellgeometrien durchgeführt werden; es ist unabhängig von der Art des verwendeten Elektrolyten, der demnach auch extrem korrosiv und/oder hydrolyseempfindlich sein kann. Das Verfahren ist aufgrund der Möglichkeit, es zu parallelisieren, für große Stückzahlen geeignet. Auf der anderen Seite kann es auch für kleine Serien günstig genutzt werden, weil es in einer handelsüblichen Glovebox-Umgebung durchgeführt werden kann. Besonders bevorzugt ist es, das Verfahren mit Akkumulatoren durchzuführen, deren Elektroden als Beschichtung auf perforierten Substraten (Stromsammlern, Ableitern) aufgebracht sind, die Foliencharakter haben können. Besonders gut geeignet ist es, wie oben beschrieben, auch in Kombination mit einem Präformier-Schritt.

### Bezugszeichenliste

- Figur 1: 1 Kompartiment 1 (gesamte Zellumgebung)
2 Kompartiment 2 (Zellinneres bei der Befüllvorbereitung und Befüllung)
3 Kompartiment 3 nach der erfolgten Befüllung und Versiegelung
4 Vakuumfeste Durchführung zur Bestückung der Befüllvorrichtung mit Zellen
5 Vakuumfeste Durchführung zum Ausbringen von befüllten Zellen
6 An allen vier Seiten durch Versiegelung geschlossene Zelle
7 Optionale Einrichtung zur Präformierung von befüllten Zellen
8 Zellkörper in einer geschlossenen Pouchverpackung
9 Siegel- und Abschneidvorrichtung zur Abtrennung von Kompartiment 3 vom Kompartiment 2 nach der Befüllung
10 Vorgesehene Lage der nach der Befüllung anzubringenden Siegelnaht zur Abtrennung von Kompartiment 3 von Kompartiment 2
11 Vakuumdicht eingebrachte, adaptierbare Durchführung
12 Vakuumdichter Adapter
13 Absperrhahn zur Abtrennung von Kompartiment 4 von Kompartiment 2 nach der Befüllung
14 Kompartiment 4 nach der erfolgten Befüllung und dem Verschließen von 13
15 Vakuumfeste Durchführung für die Elektrolyt/Vakuum Zuleitung
16 Dreiwegehahn (L-Bohrung) zur Evakuierung und Befüllung von Kompartiment 2 mit Elektrolyt
17 Verbindung zum Elektrolytvorlage-/Dosiergefäß
18 Verbindung zur druckregulierbaren Vakuumpumpe II
19 Verbindung zur druckregulierbaren Vakuumpumpe I
20 Vakuumfeste Durchführung
21 Vakuumfeste Einhausung zur Abtrennung von Kompartiment 1 von der Umgebung
- Figur 2: Bezugsziffern 1 bis 21: siehe Figur 1
22 Überschüssige Verbindungsleitung für den Transfer der Zelle ins Kompartiment 5
23 Schutzgasgeschütztes Kompartiment 5 zur Entsiegelung der Zelle und Abtrennung von Kompartiment 3
24 Vakuumfeste Durchführung von Kompartiment 1 zum schutzgasgeschützen Kompartiment 5
25 Schutzgaszuführung bzw. Zuleitung einer Gaswäscheeinrichtung
- Figur 3: 27 Verbindung zur Vakuumpumpe und zur Schutzgasversorgung
28 Spritzenförmige Befüllvorrichtung
29 Elektrolytleitung
30 Druckfeste Durchführung mit Absperrventil
31 Zellkörper (Elektrodenfolienstapel)
32 Pouch-Folie Siegelnähte
33 Anoden- und Kathodenableitbleche
34 Druckfeste Öffnungsvorrichtung
35 Druckfeste Begrenzung der Befüllvorrichtung
36 Spätere Siegelnaht zum endgültigen Verschließen der Zelle
37 Pouch-Folienüberstand zur Aufnahme von Gas
38 Integrierter Siegelschritt zum ersten Verschließen der Zelle
39 Evakuierbares Kompartiment 1
40 Optionale Einrichtung zur Präformierung
- Figur 4: 41 Siegelnähte
- Figur 6: 42 Folienstack in einer für die Elektrolytbefüllung vorbereiteten, dreiseitig gesiegelten Zelle
43 Kontaktierungsbereich Elektrodenfolien<-->Tab
44 Siegelbereich für Pouch-Folienverpackung
45 Unmöglicher/erschwerter Eindringweg für Elektrolyt bei Verwendung von geschlossenem bzw. perforiertem Substratmaterial
46 Zellkörper (Lagenstapel aus Anoden, Separatoren, Kathoden mit kontaktierten Tabs)
- Figur 8: 47 länglich ausgeführter Adapter mit vakuumdichter Durchführung durch eine Siegelnaht in das Zellinnere
48 verkleinerte Siegel- und Abschneidvorrichtung zur Abtrennung von Kompartiment 3 vom Kompartiment 2 nach der Befüllung durch (abquetschende) Siegelung im Bereich des länglich ausgeführten Adapters.
49 länglicher vakuumdichter Adapter in Form eines eingeschweißten Röhrchens, in das die Elektrolytleitung dichtend eingeführt werden kann. Alternativ kann die Elektrolytleitung selbst in die Öffnung in der Siegelnaht eingeschweißt sein und
10 mögliche Lage der nach der Befüllung anzubringenden Siegelnaht zur Abtrennung von Kompartiment 3 von Kompartiment 2

## Patentansprüche

1. Verfahren zum Befüllen eines Batterie- oder Akkumulator-Folienbeutels (6) mit Flüssigkeit und Verschließen dieses Beutels, umfassend die Schritte:
(a) Bereitstellen eines flexiblen Folienbeutels, in dessen Innenraum sich die festen Bestandteile (8; 31) der Batterie bzw. des Akkumulators befinden, wobei der Folienbeutel mit Ausnahme eines abdichtbaren Zugangs (11, 12) für Flüssigkeit dicht verschlossen ist,
(b) Einbringen des Folienbeutels in eine gasdicht verschließbare Kammer (21) und gasdichtes Verschließen der Kammer,
(c) nach Schritt (b) Erzeugen eines Unterdrucks im Folienbeutel,
(d) dichtendes Verbinden des Flüssigkeitszugangs am Folienbeutel mit einem Flüssigkeitsvorrats-Gefäß (17) über eine Verbindungsleitung (14;29),
(e) nach Schritt (d) vollständiges Befüllen des Beutel-Innenraums mit Flüssigkeit über die Verbindungsleitung und
(f) hermetisches Verschließen des Folienbeutels durch Setzen einer Naht (10; 36), wobei entweder
(i) die Naht so gesetzt wird, dass hierbei der mit der Verbindungsleitung verbundene Flüssigkeitszugang vom Innenraum des Folienbeutels getrennt wird und die Verbindungsleitung anschließend aus dem Flüssigkeitszugang gelöst wird,
oder
(ii) sich die Naht durch die Verbindungsleitung erstreckt,
und
(g) Abtrennen des oder der außerhalb der Naht liegenden Folien- und/oder Leitungsteile (37).

2. Verfahren nach Anspruch 1, worin die festen Bestandteile der Batterie oder des Akkumulators über durch eine bereits verschlossene Naht geführte Ableiter von Kathode und Anode (33) von außen elektrisch ankontaktierbar sind.

3. Verfahren nach Anspruch 1 oder 2, worin die in Schritt (f) gesetzte Naht eine Siegelnaht ist.

4. Verfahren nach Anspruch 3, worin die Siegelnaht in einer Siegelstation (9) gesetzt wird, die sich innerhalb oder außerhalb der gasdicht verschließbaren Kammer befindet.

5. Verfahren nach einem der voranstehenden Ansprüche, worin der Folienbeutel in aufrechter Stellung mit Flüssigkeit befüllt wird und sich der abdichtbare Zugang für Flüssigkeit kopfseitig am Folienbeutel befindet.

6. Verfahren nach einem der voranstehenden Ansprüche, worin der abdichtbare Zugang (11) für Flüssigkeit ein Adapter (12) ist, in den dichtend eine Leitung eingeführt werden kann, und der Adapter mittels einer Naht, insbesondere einer Schweißnaht, am Folienbeutel befestigt ist.

7. Verfahren nach einem der voranstehenden Ansprüche, worin gleichzeitig mit dem Erzeugen eines Unterdrucks im Folienbeutel oder zuvor ein Unterdruck in der gasdicht verschließbaren Kammer erzeugt wird.

8. Verfahren nach einem der voranstehenden Ansprüche, worin die Verbindung zwischen der Leitung und dem Flüssigkeitsvorrats-Gefäß trennbar ist und die Leitung weiterhin trennbar mit einer Vakuumquelle (18) in Kontakt steht, wobei der Unterdruck im Folienbeutel durch Verbinden des Flüssigkeitszugangs am Folienbeutel mit der genannten Leitung und dem Öffnen der Leitung zur Vakuumquelle hin erzeugt wird, worauf die Leitung zur Vakuumquelle hin verschlossen und mit dem Flüssigkeitsvorrat verbunden wird, um den Beutel-Innenraum mit Flüssigkeit zu befüllen.

9. Verfahren nach Anspruch 8, worin die gasdicht verschließbare Kammer über die Leitung evakuiert wird, die mit einer Vakuumquelle in Kontakt steht, bevor diese dichtend mit dem Flüssigkeitszugang am Folienbeutel verbunden wird.

10. Verfahren nach einem der Ansprüche 1 bis 7, worin die gasdicht verschließbare Kammer über eine eigene Vakuumleitung (19) evakuierbar ist.

11. Verfahren nach Anspruch 10, worin der Folienbeutel im Schritt (c) zusammen mit der gasdicht verschließbaren Kammer über deren eigene Vakuumleitung evakuiert wird und Schritt (d) danach erfolgt.

12. Verfahren nach einem der voranstehenden Ansprüche, worin nach einem ersten Erzeugen von Unterdruck im Folienbeutel dieser mindestens einmal mit Schutzgas geflutet und anschließend nochmals mit Unterdruck beaufschlagt wird.

13. Verfahren nach einem der voranstehenden Ansprüche, worin in Schritt (e) die Flüssigkeit aus dem Flüssigkeitsvorrats-Gefäß in ein mit einem Inertgas beaufschlagtes Puffergefäß dosiert und das Puffergefäß durch die Befüllung des Beutelinnenraums geleert wird derart, dass das Totvolumen in der Leitung, die zu dem Flüssigkeitsvorratsgefäß führt, zum Ende der Befüllung mit Inertgas gefüllt ist, wobei die Dosierung bevorzugt mit Hilfe einer volumetrischen Skala oder einem Durchflussgerät erfolgt.

14. Verfahren nach Anspruch 2 und Anspruch 5 oder einem von beiden Ansprüchen abhängigen Anspruch, zusätzlich umfassend das Präformieren (7) des Akkumulators nach dem hermetischen Verschließen des Folienbeutels, das Setzen einer inneren Naht (36), mit der ein oberer Teil des Beutelinneren mit möglicherweise darin befindlichen Gasblasen räumlich abgetrennt wird, und das Abtrennen des oder der außerhalb der inneren Naht liegenden Folienteile (37).

15. Verfahren nach einem der voranstehenden Ansprüche, worin die festen Bestandteile der Batterie oder des Akkumulators Elektroden umfassen, die auf einem perforierten leitfähigen Substrat angeordnet sind, worin jede der Elektroden vorzugsweise dadurch hergestellt wurde, dass eine pastöse Elektrodenmasse auf einem perforierten leitfähigen Substrat aufgetragen und anschließend getrocknet und/oder gehärtet wurde.

## Claims

1. Method for filling a battery or accumulator foil pouch (6) with fluid and sealing of said pouch, comprising:
a) providing a flexible foil pouch in an interior chamber of which solid components (8;31) of the battery and/or accumulator are accommodated, wherein the foil pouch is tightly sealed with the exception of a sealable fluid access port (11, 12),
b) situating the foil pouch in a gas-tight sealable chamber (21) and gas-tight sealing of the chamber,
c) following step (b), applying a vacuum in the foil bag,
d) connecting the fluid access port on the foil pouch to a fluid source reservoir (17) via a connecting tube (14;29), forming a tight seal,
e) following step (d), completely filling the pouch interior with fluid via the connecting tube and
f) hermetically sealing the foil pouch by placing a seam (10;36), wherein either
(i) the seam is placed such that the fluid access port connected to the connecting tube is separated from the interior of the foil pouch and the connecting tube is subsequently removed from the fluid access port,
or
(ii) the seam extends through the connecting tube, and,
g) separating foil and/or connecting tube components (37) that are situated outside the seam.

2. Method according to claim 1, wherein the solid components of the battery or accumulator are electrically contactable from the outside by cathode and anode conductors (33) guided through a previously closed seam.

3. Method according to claim 1 or claim 2, wherein the seam placed in step (f) is a sealed seam.

4. Method according to claim 3, wherein the sealed seam is placed in a sealing station (9) located inside or outside of the gas-tight sealable chamber.

5. Method according to any one of the preceding claims, wherein the foil pouch is filled with fluid when in an upright position, and the sealable fluid access port is located on the head side on the foil pouch.

6. Method according to any one of the preceding claims, wherein the sealable fluid access port (11) is an adapter (12) in which a tube can be introduced forming a tight seal, with the adapter being secured by means of a seam, in particular a weld seam, to the foil pouch.

7. Method according to any one of the preceding claims, wherein a vacuum is generated in the gas-tight sealable chamber simultaneously with, or prior to, a vacuum being generated in the foil bag.

8. Method according to any one of the preceding claims, wherein the connection between the tube and the fluid source reservoir is separable and the tube is in continued separable contact with a vacuum source (18), wherein the vacuum in the foil pouch can be produced by connecting the fluid access port of the foil pouch with said tube and opening of the tube to the vacuum source, after which the tube is closed towards the vacuum source and connected to the fluid reservoir so as to fill the pouch interior with fluid.

9. Method according to claim 8, wherein the gas-tight sealable chamber is evacuated via the tube that is in contact with a vacuum source prior to said tube being connected to the fluid access port on the foil pouch, forming a tight seal.

10. Method according to any one of claims 1 to 7, wherein the gas-tight sealable chamber is evacuable via a separate vacuum tube (19).

11. Method according to claim 10, wherein the foil pouch bag is evacuated in step (c) together with the gas-tight sealable chamber in a vacuum tube of the gas-tight sealable chamber, and step (d) is carried out thereafter.

12. Method according to any one of the preceding claims, wherein, following a first generation of vacuum in the foil pouch said foil pouch is at least once purged with protective gas and vacuum applied thereafter once more.

13. Method according to any one of the preceding claims, wherein in step (e) the fluid from the fluid source reservoir is metered into a buffer vessel to which an inert gas buffer is applied, the buffer vessel being emptied by the filling of the pouch interior such that the dead volume in the tube leading to the fluid reservoir is filled at the end of filling with inert gas, wherein the metering is preferably carried out by means of a scale or a volumetric flow device.

14. Method according to claim 2 and claim 5 or a claim dependent on both of them, additionally comprising pre-forming of the accumulator (7) following the hermetic sealing of the foil pouch, placing of an inner seam (36) with which an upper part of the bag interior with gas bubbles possibly contained therein is physically separated, and removing of foil component(s) (37) located outside the inner seam.

15. Method according to any one of the preceding claims, wherein the solid components of the battery or accumulator comprise electrodes arranged on a perforated conductive substrate, wherein each of the electrodes is prepared by applying a paste-like electrode material onto a perforated conductive substrate being subsequently dried and/or cured.

## Revendications

1. Procédé de remplissage d'un sachet en film d'une batterie ou d'un accumulateur (6) avec un liquide et de fermeture de ce sachet, comprenant les étapes suivantes:
(a) préparation d'un sachet en film souple, à l'intérieur duquel se trouvent les constituants solides (8; 31) de la batterie ou de l'accumulateur, le sachet en film étant fermé de manière étanche au liquide, à l'exception d'un orifice d'introduction (11, 12) obturable;
(b) introduction du sachet en film dans une chambre (21) pouvant être fermée de manière étanche aux gaz et fermeture de la chambre de manière étanche aux gaz;
(c) après l'étape (b), création d'une dépression dans le sachet en film;
(d) raccordement étanche de l'orifice d'introduction de liquide du sachet en film à un réservoir de stockage de liquide (17) au moyen d'une conduite de liaison (14; 29) ;
(e) après l'étape (d), remplissage complet de l'intérieur du sachet avec du liquide par le biais de la conduite de liaison; et
(f) fermeture hermétique du sachet en film en réalisant une soudure (10; 36), dans lequel soit
(i) la soudure est réalisée de telle façon que l'orifice d'introduction relié à la conduite de liaison soit séparé de l'intérieur du sachet en film et que la conduite de liaison soit ensuite détachée de l'orifice d'introduction de liquide, soit
(ii) la soudure s'étend à travers la conduite de liaison; et
(g) séparation de la ou des partie (s) de film et/ou de conduite (37) située(s) à l'extérieur de la soudure.

2. Procédé selon la revendication 1, dans lequel les constituants solides de la batterie ou de l'accumulateur peuvent être contactés électriquement de l'extérieur par le biais de conducteurs de cathode et d'anode (33) sortant à travers une soudure déjà fermée.

3. Procédé selon la revendication 1 ou 2, dans lequel la soudure réalisée à l'étape (f) est une soudure à chaud.

4. Procédé selon la revendication 3, dans lequel la soudure à chaud est réalisée dans une station de soudage (9), qui se trouve à l'intérieur ou à l'extérieur de la chambre pouvant être fermée de manière étanche aux gaz.

5. Procédé selon l'une quelconque des revendications précédentes, dans lequel le sachet en film est rempli avec du liquide en position debout et l'orifice d'introduction de liquide obturable se trouve en tête sur le sachet en film.

6. Procédé selon l'une quelconque des revendications précédentes, dans lequel l'orifice d'introduction (11) de liquide obturable est un adaptateur (12), dans lequel une conduite peut être introduite de manière étanche et l'adaptateur est fixé au sachet en film au moyen d'une soudure, en particulier d'un cordon de soudure.

7. Procédé selon l'une quelconque des revendications précédentes, dans lequel on produit, simultanément à la création d'une dépression dans le sachet en film ou préalablement, une dépression dans la chambre pouvant être fermée de manière étanche aux gaz.

8. Procédé selon l'une quelconque des revendications précédentes, dans lequel la liaison entre la conduite et le réservoir de stockage de liquide est détachable et la conduite est en outre en contact de façon détachable avec une source de vide (18), la dépression dans le sachet en film étant produite par liaison de l'orifice d'introduction de liquide sur le sachet en film avec ladite conduite et l'ouverture de la conduite vers la source de vide, la conduite étant ensuite fermée vers la source de vide et reliée au réservoir de stockage de liquide, afin de remplir l'intérieur du sachet avec du liquide.

9. Procédé selon la revendication 8, dans lequel la chambre pouvant être fermée de manière étanche aux gaz est évacuée par le biais de la conduite, qui est en contact avec une source de vide, avant que celle-ci soit reliée de façon étanche à l'orifice d'introduction de liquide du sachet en film.

10. Procédé selon l'une quelconque des revendications 1 à 7, dans lequel la chambre pouvant être fermée de manière étanche peut être évacuée par le biais d'une conduite de vide particulière (19).

11. Procédé selon la revendication 10, dans lequel le sachet en film est évacué à l'étape (c) en même temps que la chambre pouvant être fermée de manière étanche aux gaz par le biais de la conduite de vide particulière de celle-ci et l'étape (d) est ensuite exécutée.

12. Procédé selon l'une quelconque des revendications précédentes, dans lequel, après une première création d'une dépression dans le sachet en film, celui-ci est balayé au moins une fois avec un gaz protecteur et ensuite encore soumis à une dépression.

13. Procédé selon l'une quelconque des revendications précédentes, dans lequel à l'étape (e) le liquide provenant du réservoir de stockage de liquide est introduit de façon dosée dans un réservoir tampon exposé à un gaz inerte et le réservoir tampon est vidé par le remplissage de l'intérieur du sachet, de telle manière que le volume mort dans la conduite, qui conduit au réservoir de stockage de liquide, soit rempli de gaz inerte jusqu'à la fin du remplissage, le dosage étant effectué de préférence à l'aide d'une échelle volumétrique ou d'un débitmètre.

14. Procédé selon la revendication 2 et la revendication 5 ou une revendication dépendant des deux revendications, comprenant en outre le préformage (7) de l'accumulateur après la fermeture du sachet en film, la réalisation de la soudure intérieure (36), avec laquelle une partie supérieure de l'intérieur du sachet avec des bulles de gaz s'y trouvant éventuellement est séparée spatialement, et la séparation de la ou des partie (s) de film (37) se trouvant à l'extérieur de la soudure intérieure.

15. Procédé selon l'une quelconque des revendications précédentes, dans lequel les constituants solides de la batterie ou de l'accumulateur comprennent des électrodes, qui sont disposées sur un substrat conducteur perforé, dans lequel chacune des électrodes a de préférence été fabriquée en déposant une masse d'électrode pâteuse sur un substrat conducteur perforé et ensuite en la séchant et/ou en la durcissant.
